# EUROPÄISCHE PATENTANMELDUNG

(11) **EP 4 122 360 A1**
(43) Veröffentlichungstag der Anmeldung: **25.01.2023**
(21) Anmeldenummer: 21186949.0
(22) Anmeldetag: 21.07.2021
(51) Int. Cl.: A47J 17/18, A23N 7/02

(54) **KARTOFFELSCHÄLSCHEIBE, KÜCHENMASCHINE UND VERFAHREN**

(71) Anmelder: Vorwerk & Co. Interholding GmbH, 42270 Wuppertal (DE)
(72) Erfinder: THIELE, Tobias, D-42477 Radevormwald (DE); STOLZE, Svenja, D-41517 Grevenbroich (DE); HEYNEN, Andreas, D-42477 Radevormwald (DE); THIES, Felix, D-42115 Wuppertal (DE); SICKERT, Michael, D-58256 Ennepetal (DE); SCHMITZ, Kevin, D-40599 Düsseldorf (DE); JANSEN, Sebastien, D-44803 Bochum (DE); IRNICH, Lukas, D-52393 Hürtgenwald (DE); BECKER, Malte, D-52072 Aachen (DE); KLODT, Maximilian, D-52064 Aachen (DE); MÜLLER-TÖNNISSEN, Lars, D-52064 Aachen (DE)
(74) Vertreter: Gille Hrabal Partnerschaftsgesellschaft mbB Patentanwälte

(57) **Zusammenfassung**

Die Erfindung betrifft eine Kartoffelschälscheibe (7) zum Schälen von Kartoffeln. Die Kartoffelschälscheibe (7) weist eine mittige Öffnung (38) auf, die durch eine Innenkontur (39) der Kartoffelschälscheibe (7) gebildet wird. Eine Oberfläche (18) der Kartoffelschälscheibe (7) weist eine Vielzahl von Zähnen (17) auf. Die Zähne (17) weisen eine Ausrichtung auf, so dass durch ein Rotieren der Kartoffelschälscheibe (7) in eine erste Rotationsrichtung (41) um eine Mittelachse (40), die koaxial zur mittigen Öffnung (38) verläuft, Kartoffeln durch die Zähne (17) geschält werden. Die Erfindung betrifft ferner ein Speisenzubereitungsgerät mit einer solchen Kartoffelschälscheibe sowie ein Verfahren zum Schälen von Kartoffeln. Die Effizienz bei der Zubereitung einer Speise kann auf diese Weise erhöht werden.

## Beschreibung

Die Erfindung betrifft eine Kartoffelschälscheibe zum Schälen von Kartoffeln, eine Küchenmaschine mit einer Kartoffelschälscheibe sowie ein Verfahren zum Schälen von Kartoffeln.

Es gibt Kartoffelschälmaschinen, die Drehscheiben mit einer abrasiven Oberfläche in Rotation versetzen, um Kartoffeln zu schälen. Zu den bekannten Kartoffelschälmaschinen gehören beispielsweise die Geräte Kenwood Chef AT444 und Melissa 16220007. Die dort eingesetzte, abrasive Oberfläche wird durch eine Vielzahl von drehsymmetrischen Vorsprüngen erzeugt. Die Vorsprünge haben eine NoppenForm, die ähnlich aussehen wie kleine Halbkugeln auf einer ebenen Oberfläche und senkrecht zur Oberfläche hervorstehen.

Die vorgenannten, aus dem Stand der Technik bekannten Merkmale können einzeln oder in beliebiger Kombination mit einem der nachfolgend beschriebenen erfindungsgemäßen Gegenstände und Ausführungsformen kombiniert werden.

Es ist Aufgabe der Erfindung, eine weiterentwickelte Kartoffelschälscheibe nebst Verfahren zum Schälen von Kartoffeln bereitzustellen.

Zur Lösung der Aufgabe dienen eine Kartoffelschälscheibe gemäß dem Hauptanspruch sowie ein Verfahren gemäß dem Nebenanspruch. Vorteilhafte Ausführungsformen ergeben sich aus den Unteransprüchen.

Zur Lösung der Aufgabe dient eine Kartoffelschälscheibe zum Schälen von Kartoffeln. Die Kartoffelschälscheibe weist insbesondere eine mittige Öffnung auf, die bevorzugt durch eine Innenkontur der Kartoffelschälscheibe gebildet wird. Eine Oberfläche der Kartoffelschälscheibe weist eine Vielzahl von Zähnen auf. Die Zähne weisen eine Ausrichtung auf, so dass durch ein Rotieren der Kartoffelschälscheibe in eine erste Rotationsrichtung um eine Mittelachse, die insbesondere koaxial zur mittigen Öffnung verläuft, Kartoffeln durch die Zähne geschält werden bzw. geschält werden können. Die Effizienz des Schälvorgangs und die Effizienz der Speisenzubereitung insgesamt können auf diese Weise erhöht werden. Durch die Ausrichtung der Zähne können Kartoffeln in besonders kurzer Zeit geschält werden. Gleichzeitig wird die Voraussetzung geschaffen, dass durch ein Wechseln der Rotationsrichtung ohne ein Wechseln oder Umdrehen der Kartoffelschälscheibe eine zusätzliche Bearbeitung der Kartoffeln erfolgen kann, beispielsweise ein langsames Garen (auch als "slow cooking" bezeichnet), ein Garen einer Speise in einem Kunststoffbeutel (auch als "sous vide" bezeichnet) oder ein Polieren, also ein Glätten einer zuvor aufgerauten Kartoffeloberfläche.

Eine Kartoffelschälscheibe ist eine Drehscheibe mit einer abrasiven Oberfläche zum Schälen von Kartoffeln. Eine Kartoffelschälscheibe zum Schälen von Kartoffeln kann auch anderes Gemüse mit einer Schale schälen, insbesondere andere Wurzelgemüse wie Rüben und Möhren. Insbesondere beträgt die Dicke der Kartoffelschälscheibe mindestens 1% und/oder höchstens 5% von dessen Durchmesser. In einer Ausgestaltung wird Metall, vorzugsweise Edelstahl, besonders bevorzugt V2A, eingesetzt, um die Kartoffelschälscheibe oder zumindest einen Scheibenteil der Kartoffelschälscheibe, der die Oberfläche mit den Zähnen enthält, herzustellen. Insbesondere wird der Scheibenteil aus einem Metallblech hergestellt, vorzugsweise durch Umformen mithilfe einer Presse, um z.B. die Zähne auszuformen.

Die mittige Öffnung dient dem Ankoppeln an einen Antrieb zum Rotieren der Kartoffelschälscheibe. Die mittige Öffnung erstreckt sich koaxial zur Mittelachse. Die Mittelachse ist die Rotationsachse der Kartoffelschälscheibe. Die mittige Öffnung kann als eine Durchgangsöffnung, als einseitig geöffnete, mittige Öffnung, also als eine Vertiefung, oder als eine Vertiefung mit einer Durchgangsöffnung im Grund der Vertiefung ausgestaltet sein. Die Innenkontur, welche die mittige Öffnung bildet, umfasst die Flächen, welche die mittige Öffnung begrenzen.

Ein Zahn mit einer Ausrichtung ist kein drehsymmetrisch geformter Zahn und kann auch kein drehsymmetrisch geformter Zahn sein. Ausrichtung eines Zahns meint, dass der Zahn in eine Richtung parallel zur angrenzenden Oberfläche der Kartoffelschälscheibe orientiert ist. Ein ausgerichteter Zahn ist derart ausgerichtet, dass dessen Ausrichtung in die Richtung zeigt, in der der Zahn ein Schälen erlaubt. Insbesondere nimmt eine Höhe des Zahns in die Richtung seiner Orientierung zu, so dass die Höhe des Zahns zu Anfang geringer ist als am Ende der Erstreckung des Zahns in Richtung seiner Orientierung. Im Folgenden werden Orientierung, Richtung der Orientierung, Ausrichtung und Ausrichtungsrichtung als Synonyme verwendet. Die Zähne schälen die Kartoffel durch Abtragen der mit einer Schale versehenen Kartoffeloberfläche, wobei jeder Zahn nur mit einem kleinen Teil der Kartoffeloberfläche interagiert.

In einer Ausführungsform ist die Kartoffelschälscheibe wellenartig, bevorzugt wellenförmig, geformt. Die Kombination aus einer wellenartig geformten Kartoffelschälscheibe mit einer Vielzahl von Zähnen mit Ausrichtung führt in synergetischer Weise zu einer besonders hohen Effizienz des Schälvorgangs. Die Kartoffeln werden durch eine wellenförmige Form von der Kartoffelschälscheibe besonders frequentiert nach oben katapultiert und besonders wirkungsvoll um die eigene Achse gedreht. Die wellenartige Form bewirkt, dass die Kartoffeln (oder z.B. Rüben) zufällig im Speisenzubereitungsgefäß rotieren und hüpfen, so dass die Kartoffeln mit der Zeit von jeder Seite und der gesamten Kartoffeloberfläche durch die Interaktion mit den Zähnen geschält werden. Die Schale der Kartoffeln wird nicht übermäßig lange an einer Stelle geschält. Die Schale wird gleichmäßig abgetragen. Insbesondere verläuft ein äußerer Rand der Kartoffelschälscheibe wellenförmig. Bevorzugt ist dieser äußere Rand geschlossen und weist über den gesamten Umfang einen stetigen Verlauf auf, d.h., ohne Stufen oder Unterbrechungen. In einer Ausgestaltung weist der äußere Rand der Kartoffelschälscheibe bogenartige Auskerbungen auf, um Wasser von unten nach oben vom Rand aus zur Oberfläche fließen zu lassen. Zu diesem Zweck können in einer weiteren Ausgestaltung alternativ oder zusätzlich ein oder zwei Öffnungen, z.B. in Form von Bohrungen durch die Oberfläche eines gewellten Bereichs der Kartoffelschälscheibe, eingebracht sein. In einer Ausgestaltung weist eine wellenartig geformte Kartoffelschälscheibe einen oder mehrere rampenförmige Abschnitte in Umfangrichtung auf. In einer Ausgestaltung weist eine wellenförmig geformte Kartoffelschälscheibe mindestens ein und/oder höchstens vier, ganz besonders bevorzugt genau zwei Wellenberge und/oder Wellentäler auf, die sich von der mittigen Öffnung aus radial ausbilden. Die Oberfläche einer wellenförmig geformte Kartoffelschälscheibe erstreckt sich in Umfangrichtung vorzugsweise geschlängelt und/oder wie eine Sinuskurve. Es handelt sich bevorzugt um eine dreidimensional in Umfangrichtung wellenartig oder wellenförmig geformte Kartoffelschälscheibe relativ zu der im Wesentlichen zylinderförmigen Innenkontur. Der Abstand von dem Wellental zum Wellenberg beträgt parallel zur Mittelachse gemessen mindestens 10% und/oder höchstens 30% des Durchmessers der Kartoffelschälscheibe.

In einer Ausgestaltung weist die Kartoffelschälscheibe eine Vielzahl von Schlitzen auf. Auch die Kombination einer Kartoffelschälscheibe mit Schlitzen einerseits und einer Vielzahl von Zähnen mit Ausrichtung andererseits führt in synergetischer Weise zu einer besonders hohen Effizienz des Schälvorgangs. Insbesondere beim Schälen in einem Wasserbad ermöglichen die Schlitze einen sehr effektiven Abtransport von abgeschälter Schale. Ein Verschmutzen und Bedecken der Zähne der Kartoffelschälscheibe können so reduziert werden. Ein Schlitz bildet eine Öffnung zum Durchlassen von Wasser von der Unterseite der Kartoffelschälscheibe zur Oberfläche. Die Anzahl der Schlitze ist dabei technisch unerheblich, weil bereits ein Schlitz genügt, um Wasser durch die Scheibe auf die Oberfläche durchzulassen. Wenn das Schälen nicht im Wasserbad stattfindet, tragen Luftströmungen durch die Schlitze teilweise zum Lösen von Schalenresten bei, allerdings nicht so effektiv wie in einem Wasserbad. Die Schlitze können in Umfangrichtung beispielsweise mit gleichen Abständen angeordnet sein und/oder sich im Wesentlichen radial von der Mittelachse nach außen erstrecken, z.B. in einer gebogenen Form. Die gebogene Form der Schlitze kann entgegen der Rotationsrichtung zum Schälen verlaufen und/oder derart gebogen sein, dass der Anfang des Schlitzes zum Ende des Schlitzes eine Winkelveränderung gemessen parallel zur Oberfläche der Kartoffelschälscheibe von mindestens 5° und/oder höchstens 30° oder 45° aufweist. Beispielsweise ist der Schlitz mindestens 2 mm und/oder höchstens 8 mm breit. Beispielsweise liegt der Anfang des Schlitzes mindestens 5 mm in radialer Richtung von der Innenkontur der mittleren Öffnung entfernt. Beispielsweise ist das Ende des Schlitzes vom Außenrand der Kartoffelschälscheibe mindestens 3 mm entfernt. Insbesondere sind insgesamt mindestens 2 und/oder höchstens 30 Schlitze vorgesehen. Grundsätzlich können die Schlitze in radialer Richtung in mindestens 2 und/oder höchstens 5 Teilschlitze unterteilt sein, die untereinander nicht durchgängig durch eine Öffnung verbunden sind. Die Schlitze können in radialer Richtung auch durchgängig ausgeführt sein, also nicht unterteilt. Die oben erwähnten, geometrischen Merkmale der Schlitze erwecken beim Benutzer unterschiedliche Eindrücke, die später genauer erläutert werden.

Studien haben gezeigt, dass eine besondere Synergie für den Schälvorgang in einem Wasserbad aus der Kombination von erstens Zähne mit Ausrichtung, zweitens wellenartig geformte Kartoffelschälscheibe und drittens eine Öffnung zum Durchlassen von Wasser von einer Unterseite zur Oberfläche einer Oberseite der Kartoffelschälscheibe erzielt werden kann. Ursächlich hierfür ist das aufsteigende Wasser, das an der Oberfläche der Kartoffelschälscheibe austritt, im Zusammenspiel mit der wippenden Oberflächenbewegung mit den Zähnen infolge der wellenartig geformten Kartoffelschälscheibe, die im Betrieb um die Mittelachse durch das Wasserbad rotiert.

In einer Ausführungsform sind die Zähne rampenartig, bevorzugt rampenförmig. Ein Polieren der Kartoffeln, ein Vermeiden einer Beschädigung eines Plastikbeutels um eine Speise oder ein langsames Garen ohne eine unerwünschte Beschädigung der Speise durch die Zähne der Kartoffelschälscheibe kann auf diese Weise ermöglicht werden. Ein komplexer Kochvorgang, der ein Schälen und Polieren oder ein Schälen und langsam Garen enthält, kann folglich besonders effizient realisiert werden. Ein aufwändiges Demontieren oder Wenden der Kartoffelschälscheibe können entfallen.

Ein rampenartiger Zahn weist eine Schräge in die Ausrichtungsrichtung des Zahns auf, wobei die Länge der Schräge in der Ausrichtungsrichtung des Zahns größer ist als die Höhe des Zahns. Die Schräge kann als eine Rampenfläche oder als ein Bergrücken ausgestaltet sein. In einem linienartigen Bergrücken stoßen zwei Flächen zusammen, die seitlich vom dem Bergrücken (insbesondere unter einem Winkel von höchstens 135°) zur Oberfläche der Kartoffelschälscheibe verlaufen. Eine rampenförmige oder rampenartige Form der Zähne ermöglichen, dass durch Rotieren der Kartoffelschälscheibe in eine Richtung, die entgegengesetzten zur Rotationsrichtung zum Schälen ist, ein entsprechend stumpfer Teil der Zähne (also Rampenfläche oder Bergrücken mit den zwei seitlich abfallenden Flächen) auf die Kartoffeln einwirkt, was zu den oben erwähnten Wirkungen führt. Im Gegensatz dazu kann durch eine Rotation der Kartoffelschälscheibe in die Rotationsrichtung zum Schälen, also in Wesentlichen in Richtung der Orientierung der Zähne, ein Schälen der Kartoffeln durch Eingreifen einer Schälkante an einer Vorderseite der Zähne in Ausrichtungsrichtung der Zähne erfolgen.

In einer Ausführungsform weisen die Zähne in Richtung der jeweiligen Ausrichtung - gemessen von der angrenzenden Oberfläche der Kartoffelschälscheibe - einen Steigungswinkel α von mindestens 140° und/oder höchstens 175° auf. Hierdurch erfolgt kein Schälen der Kartoffeln mehr, wenn die Rotationsrichtung umgekehrt wird. In einer Ausführungsform weisen die Zähne in Richtung der jeweiligen Ausrichtung gemessen von der angrenzenden Oberfläche der Kartoffelschälscheibe einen Steigungswinkel α von bevorzugt mindestens 155° und/oder höchstens 170° auf. Eine polierte Oberfläche einer geschälten Kartoffel, die oberflächlich glatter und stärker verdichtet ist, kann so erzielt werden, wenn die Rotationsrichtung umgekehrt wird. Durch diese Ausführungsform werden ebenfalls Speisenzubereitungen vom Typ "slow cooking" und "sous vide" unterstützt.

In einer Ausführungsform sind die Zähne der Kartoffelschälscheibe auf Ringbahnen angeordnet. Die Ringbahnen verlaufen kreisbogenförmig um die Mittelachse. Die Zähne können so besonders dicht angeordnet werden und dennoch besonders effizient schälen. Insbesondere sind mindestens 6, bevorzugt mindestens 8, und/oder höchstens 30 Ringbahnen vorgesehen. Insbesondere sind die Zähne auf einer Ringbahn in Orientierungsrichtung der Zähne mittig zentriert angeordnet, d.h., eine Mittelachse eines Zahns in Orientierungsrichtung verläuft entlang oder liegt tangential auf einer kreisbogenförmigen Achse einer Ringbahn. In einer Ausgestaltung weisen die Zähne in Orientierungsrichtung keine bogenförmige Erstreckung auf, sondern vorzugsweise eine rechteckige Erstreckung in Orientierungsrichtung. Die oben genannten, geometrischen Merkmale sind aus einer Draufsicht auf die Oberfläche der Kartoffelschälscheibe betrachtet und beschrieben. Grundsätzlich ist auch eine bogenförmige Erstreckung eines Zahns in Orientierungsrichtung möglich, so dass dann dessen Längsachse entlang der Ringbahn verläuft, also in einer Draufsicht bogenförmig. Wenn ein Zahn in der Draufsicht dreieckförmig ist, liegt dessen Bergrücken tangential auf der Ringbahn.

In einer Ausführungsform weisen die Zähne in Umfangrichtung einen gleichen Abstand auf. Der Abstand ist entlang der Ringbahn zu messen. Beispielsweise kann der Abstand in mm oder als Bogenmaß angegeben werden. Vorzugsweise beträgt der Abstand entlang dem Ringbogen gemessen ungefähr einer Länge der Zähne auf der Ringbahn, zwischen denen der Abstand gemessen wird. Vorzugsweise beträgt der Abstand mindestens 1 mm und/oder höchstens 4 mm. Besonders bevorzugt ist ein Abstand von ungefähr 3 mm, weil hierdurch ein maximum an Schäleffizienz erzielt wird.

Insbesondere haben alle Zähne der Kartoffelschälscheibe dieselbe Länge in Orientierungsrichtung, dieselbe Breite quer zur Orientierungsrichtung, dieselbe Höhe relativ zur angrenzenden Oberfläche, denselben Abstand zum nachfolgenden Zahn auf derselben Ringbahn, und/oder denselben Abstand zum nächsten Zahn auf einer benachbarten Ringbahn. Von diesem selben Abstand kann abgewichen werden, wenn ein Spalt zwischen zwei Zähnen liegt.

In einer Ausführungsform sind eine Vielzahl von Ringbahnen koaxial zur Mittelachse in einem gleichen, radialen Abstand zueinander vorgesehen. Insbesondere entspricht der radiale Abstand ungefähr einer radialen Erstreckung eines Zahns. In einer Ausgestaltung beträgt der radiale Abstand mindestens 1 mm und/oder höchstens 5 mm, bevorzugt ungefähr 3 mm. Ein besonders effizientes Schälen kann so ermöglicht werden.

In einer Ausgestaltung haben die Zähne eine Tetraeder-Form. Ein besonders effizientes Schälen kann so ermöglicht werden. Eine Tetraeder-Form hat von oben betrachtet einen dreieckigen Grundriss, eine dreieckige Fläche an der Vorderseite und zwei dreieckige Flächen an der Rückseite. Insgesamt hat eine Tetraeder-Form vier Ecken.

In einer Ausführungsform haben die Zähne eine rechteckige Rampenform. Ein besonders effizientes Schälen in die eine Rotationsrichtung und Glätten in die entgegengesetzte Rotationsrichtung können so ermöglicht werden. Vorzugsweise sind die Zähne durch Spritzguss aus Kunststoff oder durch Umformen der Oberfläche aus Metall hergestellt. Insbesondere bilden die Zähne an einer Unterseite eine Vertiefung und an der gegenüberliegenden Oberfläche einen Vorsprung. Insbesondere ist der Vorsprung ohne eine Öffnung vorgesehen. Vorzugsweise hat der Zahn eine Breite (in Querrichtung zur Orientierungsrichtung) von mindestens 2 mm und/oder höchstens 4mm, besonders bevorzugt ungefähr 3 mm. Vorzugsweise hat der Zahn eine Länge in Orientierungsrichtung von mindestens 3 mm und/oder höchstens 5 mm, bevorzugt ungefähr 4 mm. Vorzugsweise hat der Zahn eine Höhe gegenüber der angrenzenden Oberfläche der Kartoffelschälscheibe von weniger als 1 mm, vorzugsweise mindestens 0,2 mm.

Insbesondere umfasst die Kartoffelschälscheibe einen Scheibenteil mit den Zähnen und einen mittigen Anschlussteil für ein Anbringen an ein rotierbares Werkzeug zum Mischen und/oder Zerkleinern. Insbesondere ist die gesamte Oberfläche oder nur mindestens ein Abschnitt der Oberfläche des Scheibenteils mit Zähnen ausgestattet.

In einer Ausführungsform formt die Innenkontur die mittige Öffnung derart aus, dass die Kartoffelschälscheibe mit der mittigen Öffnung auf einen rotationssymmetrischen Körper mit einem Außendurchmesser von genau 17 mm aufgesteckt werden kann, so dass im aufgesteckten Zustand die Innenkontur insbesondere über eine Länge von vorzugsweise mindestens 3 mm, besonders bevorzugt mindestens 10 mm in Richtung der Mittelachse an dem rotationssymmetrischen Körper anliegt, insbesondere gleichmäßig an mehreren Punkte (z.B. mittels nach innen gewölbten Vorsprüngen), die sich gleichmäßig über den Umfang verteilen. Die Länge von mindestens 3 mm hat den Vorteil, dass insbesondere bei einer Herstellung aus Metall eine verbesserte Drehstabilität erreicht werden kann. Die Länge von mindestens 10 mm hat insbesondere bei einer Herstellung aus Kunststoff den Vorteil, dass der Mitnehmer für die Drehkopplung zum Werkzeug entlastet wird. Das Vorsehen von nach innen gewölbten Vorsprüngen aus Kunststoff hat den Vorteil, dass sich die Vorsprünge mit einer Übergangspassung oder Presspassung bezüglich des Durchmessers 17 mm elastisch beim Anbringen an dem rotationssymmetrischen Körper anpassen können, um über mindestens 15mm so anzuliegen, dass kein spaltbedingter radialer Bewegungsspielraum zwischen dem Körper und der Innenkontur entsteht. Ein besonders zuverlässiges Schalen, angetrieben von einem rotierenden Werkzeug einer Küchenmaschine, kann so ermöglicht werden. Insbesondere umfasst der mittige Anschlussteil die Innenkontur.

In einer Ausführungsform formt die Innenkontur mittels eines U-förmigen Freischnittes einen sich parallel zur Mittelachse erstreckenden Rastarm aus, der mit einer radial in Richtung der Mittelachse vorstehenden Rastnase ausgestattet ist, so dass beim Anbringen die Rastnase in Richtung der Mittelachse entlang des rotationssymmetrischen Körpers mit dem Außendurchmesser von genau 17mm entlang schleift, also unter einer Vorspannung, und in der Lage ist, in eine Vertiefung, insbesondere Ringnut, des rotationssymmetrischen Körpers einzurasten, wenn der rotationssymmetrische Körper eine solche Vertiefung, insbesondere Ringnut, aufweist. Dadurch, dass die Rastnase radial nach innen hervorsteht, entsteht eine Vorspannung von der Rastnase auf den rotationssymmetrischen Körpers mit einem Außendurchmesser von genau 17 mm infolge eines elastischen, radialen Verschwenken nach außen, wenn die Innenkontur auf den rotationssymmetrischen Körper aufgesteckt und dadurch der Rastarm mit der Rastnase nach außen verdrängt wird. Wenn der rotationssymmetrische Körper eine umlaufende Ringnut aufweist, wird die Rastnase dort durch die Vorspannung einrasten. Vorzugsweise sind der Rastarm und die Rastnase so angeordnet, dass bei Erreichen des vorgesehenen, aufgesteckten Zustands die Rastnase in die Ringnut einschnappt. Vorzugsweise stößt dann ein freies Ende des rotationssymmetrischen Körpers bzw. des rotierbaren Werkzeugs an einen Grund oder eine Stufe im Grund der mittigen Öffnung an. Weiter bevorzugt ist im Grund der mittigen Öffnung eine Durchgangsöffnung mit einem Durchmesser vorgesehen, der kleiner ― vorzugsweise ungefähr halb so groß ― ist wie der Durchmesser der mittigen Öffnung. Ein mittiger, axialer Vorsprung, z.B. eine Niete am freien Ende des rotierbaren Werkzeugs zum Mischen und/oder Zerkleinern, kann sich auf diese Weise durch die Durchgangsöffnung erstrecken und das Anliegen des restlichen, freien Endes des Werkzeugs im Grund, d.h., an einem Absatz im Grund, nicht behindern. In diesem Fall erstreckt sich der Freischnitt vorzugsweise bis zur Durchgangsöffnung und/oder der Freischnitt hat eine Breite, die dem Durchmesser der Durchgangsöffnung entspricht.

In einer Ausgestaltung werden die Zähne jeweils durch einen Vorsprung aus der Oberfläche der Kartoffelschälscheibe gebildet. In einer Ausgestaltung ist der gesamte Vorsprung aus Vollmaterial. In einer Ausgestaltung sind die Oberfläche der Kartoffelschälscheibe und die Zähne der Kartoffelschälscheibe einstückig ausgeführt. Besonders bevorzugt ist die gesamte Kartoffelschälscheibe einstückig oder mehrteilig ausgeführt. Wenn die Kartoffelschälscheibe Metall umfasst, ist ein zweiteiliger oder genau dreiteiliger Aufbau bevorzugt. Alternativ können die Zähne und die Oberfläche aus unterschiedlichen Materialien sein. In einer Ausgestaltung sind die Zähne aus Blech gefertigt und/oder aus der Oberfläche umgeformt oder gestanzt. In einer Ausgestaltung sind die Zähne und die Oberfläche aus demselben Material, vorzugsweise Kunststoff oder Metall, hergestellt.

In einer Ausführungsform ist die Kartoffelschälscheibe einschließlich der Oberfläche und Zähne durch Spritzguss, Metallguss oder Blechumformung hergestellt. Die Kartoffelschälscheibe ist hierdurch besonders lange effizient einsetzbar.

In einer Ausgestaltung sind sämtliche Kanten, Schälkanten und/oder Konturen der Zähne abgerundet ausgeführt. Ein Anhaften von Schalresten kann auf diese Weise reduziert und ein besonders effizienter Schälvorgang sichergestellt werden.

In einer Ausführungsform weisen die Zähne in Richtung der jeweiligen Ausrichtung einen Schälkantenwinkel β von mindestens 80° und/oder höchstens 100°, besonders bevorzugt ungefähr 91°, zur angrenzenden Oberfläche der Kartoffelschälscheibe auf. Ein Anhaften von Schalresten kann auf diese Weise reduziert und ein besonders effizienter Schälvorgang sichergestellt werden.

In einer Ausführungsform ist die Kartoffelschälscheibe so beschaffen, dass die Innenkontur an die Außenkontur eines rotationssymmetrischen Körpers angepasst ist. Wenn die Kartoffelschälscheibe mit der mittigen Öffnung auf einen rotationssymmetrischen Körper zum Antreiben der Kartoffelschälscheibe gesteckt wird, liegt die Innenkontur eng an der Außenkontur an, jedoch ohne eine drehfeste Verbindung zwischen der Innenkontur und der Außenkontur. Es sind lediglich Kartoffelschälscheiben bekannt, die über eine mittlere Öffnung eine drehfeste Kopplung an eine Antriebswelle bilden können. Aufgrund der zum Teil großen Drehmomentkräfte, die beim Schälen von Kartoffeln auf die Kartoffelschälscheibe und zwischen der Kartoffelschälscheibe und der Antriebswelle wirken, wurde erkannt, dass ein Weglassen einer Einrichtung zum Erzielen einer drehfesten Verbindung durch die mittlere Öffnung die Robustheit und Effizienz der Kartoffelschälscheibe erhöht.

In einer Ausgestaltung wird das Antriebsdrehmoment mittels einer Drehströmung eines Wasserbads, mittels Reibung und/oder mithilfe mindestens eines Mitnehmers auf die Kartoffelschälscheibe übertragen. Vorzugsweise dient ein Schnappverschluss zur Drehmomentübertragung durch Reibung und/oder gleichzeitig zum Halten der Kartoffelschälscheibe in seiner axialen Position relativ zu einem antreibenden Körper. Besonders bevorzugt greift der Schnappverschluss in eine umlaufende Nut des antreibenden Körpers. In einer alternativen oder ergänzenden Ausgestaltung ist der Mitnehmer in einem Abstand radial von der mittleren Öffnung an der Kartoffelschälscheibe angeordnet, um mit einem längeren Hebelarm die Drehmomentkräfte von einem ebenfalls radial liegenden Bereich des antreibenden Körpers aufzunehmen.

Ein weiterer Aspekt der Erfindung betrifft eine Küchenmaschine mit einer Kartoffelschälscheibe insbesondere gemäß dem eingangs beschriebenen Aspekt der Erfindung. Die Küchenmaschine dient dem Durchführen eines Speisenzubereitungsvorgangs durch Erhitzen, Zerkleinern und/oder Mischen einer Speise in einem Speisenzubereitungsgefäß mithilfe eines Heizelements zum Erhitzen und eines Werkzeugs zum Mischen oder Zerkleinern, wobei die Kartoffelschälscheibe manuell lösbar auf das Werkzeug aufgesteckt werden kann. Ein besonders effizientes Schälen und Zubereiten von Speisen wird so ermöglicht. Im Betrieb umschließt die Innenkontur der Kartoffelschälscheibe einen oberen, zylindrischen Bereich des Werkzeugs auf den die mittlere Öffnung aufgesteckt worden ist. Durch das Werkzeug zum Mischen oder Zerkleinern wird eine Drehströmung im Wasserbad erzeugt. Wenn kein Mitnehmer vorgesehen ist, wird die Kartoffelschälscheibe von dieser Drehströmung mitgerissen und in Rotation versetzt. Ein Schnappverschluss oder ein elastisch verformbarer, nach innen gerichteter Vorsprung der Kartoffelschälscheibe können vorgesehen werden, um in eine umlaufende Nut in dem oberen, zylindrischen Bereich des Werkzeugs einzugreifen, um einem axialen Abheben der Kartoffelschälscheibe vom Werkzeug entgegenzuwirken. Bevorzugt kann ein Mitnehmer an der Unterseite der Kartoffelschälscheibe mit einem Arm des Werkzeugs gekoppelt werden, um ein Drehmoment zu übertragen. Kartoffeln können auf die Kartoffelschälscheibe gegeben werden, die bevorzugt von einem Wasserbad umgeben ist. Durch Rotation der Kartoffelschälscheibe werden die Kartoffeln geschält. Wenn die Rotationsrichtung umgekehrt wird, erfolgt kein Schälen der Kartoffeln.

In einer Ausführungsform ― oder einem weiteren Aspekt, der eine Kartoffelschälscheibe zum Schälen von Kartoffeln zum Einsatz und Betrieb mit einer Küchenmaschine durch ein Aufsetzen und Drehkoppeln der Kartoffelschälscheibe mit einem drehbaren Werkzeug zum Mischen oder Zerkleinern der Küchenmaschine betrifft ― ist ein eckiger Zahn vorgesehen, insbesondere ein quaderförmiger Zahn, wobei eine Vielzahl der Zähne auf einer Oberfläche der Kartoffelschälscheibe positioniert sind und/oder mit einer vorderen Fläche tangential, im Wesentlichen tangential oder parallel zu einer Umfangrichtung zeigen. Die Ausrichtung der Zähne ist also in Umfangrichtung oder zumindest im Wesentlichen im Umfangrichtung. Insbesondere haben die Zähne eine erste Fläche an der Rückseite mit einem Winkel α zur Oberfläche der Kartoffelschälscheibe und/oder eine zweite Fläche an der Vorderseite, also insbesondere die vordere Fläche, mit einem Winkel β zur Oberfläche der Kartoffelschälscheibe. Ein Plateau, das vorzugsweise gerade und/oder im Wesentlichen parallel zur Oberfläche der Kartoffelschälscheibe verläuft, verbindet die erste Fläche und die zweite Fläche. Insbesondere liegt der Winkel α und/oder der Winkel β zwischen 80° und 100°, bevorzugt ungefähr 90°. Eine Normale der ersten und/oder zweiten Fläche ist tangential, im Wesentlichen tangential oder parallel zur Umfangrichtung der Kartoffelschälscheibe ausgerichtet. Insbesondere liegen eine Normale der ersten Fläche und eine Normale der zweiten Fläche in einer Ebene, die vorzugsweise parallel zur Mittelachse orientiert ist.

In einer Ausführungsform oder einem weiteren Aspekt sind ein Wandeinsatz mit einer abrasiven Struktur oder ein Kartoffelschäl-Topfeinsatz mit einer abrasiven Struktur vorgesehen. Insbesondere kann ein Wandeinsatz mit einer abrasiven Struktur in dem Speisenzubereitungsgefäß angebracht werden, vorzugsweise an dessen Innenwandung, also dessen innerer Mantelfläche. Alternativ kann ein Kartoffelschäl-Topfeinsatz mit einer abrasiven Struktur in dem Speisenzubereitungsgefäß angeordnet werden. Entweder liegt der Topfeinsatz an der Innenwandung des Speisenzubereitungsgefäßes an oder ist im Betrieb umfänglich davon beabstandet. Die abrasive Struktur oder oben beschriebenen Ausgestaltungen und Varianten sind bevorzugt Zähne, die bereits in dem eingangs beschriebenen Aspekt der Erfindung beschrieben worden sind. Andere abrasive Strukturen wie in einigen der folgenden Aspekte beschrieben sind ebenfalls möglich. Ein Topfeinsatz besteht im Wesentlichen aus einer umlaufenden Topfeinsatzwandung und einem Boden, der die Merkmale der Kartoffelschälscheibe aufweist. Ein Topfeinsatz kann aus der Kartoffelschälscheibe als Boden und einer Topfeinsatzwandung hergestellt werden.

Ein weiterer Aspekt der Erfindung betrifft ein Verfahren zum Schälen von Kartoffeln mit einer Küchenmaschine, insbesondere der Küchenmaschine gemäß dem vorhergehenden Aspekt der Erfindung, und einer Kartoffelschälscheibe, insbesondere gemäß dem eingangs beschriebenen Aspekts der Erfindung. Die Kartoffelschälscheibe weist eine mittige Öffnung auf, die durch eine Innenkontur der Kartoffelschälscheibe gebildet wird. Die Oberfläche der Kartoffelschälscheibe weist eine Vielzahl von Zähnen auf, die eine Ausrichtung aufweisen. Das Verfahren umfasst folgende Schritte: Anbringen der Kartoffelschälscheibe mit der mittigen Öffnung auf ein Werkzeug zum Mischen oder Zerkleinern der Küchenmaschine, das sich in einem Speisenzubereitungsgefäß der Küchenmaschine befindet, insbesondere am Boden; Zuführen von Wasser in das Speisenzubereitungsgefäß, so dass mindestens die Zähne der Kartoffelschälscheibe von Wasser umgeben sind; Aktivieren der Küchenmaschine zum Rotieren des Werkzeugs in eine erste Rotationsrichtung um eine Mittelachse, die koaxial zur mittigen Öffnung verläuft, um die Kartoffeln zu schälen; Aktivieren der Küchenmaschine zum Rotieren des Werkzeugs in eine zweite Rotationsrichtung, die entgegengesetzt zur ersten Rotationsrichtung ist, um mithilfe der Kartoffelschälscheibe, die seit dem Anbringen am Werkzeug nicht gelöst worden ist, einen Speisenzubereitungsvorgang durchzuführen, der kein Schälen von Kartoffeln beinhaltet.

Ein weiterer Aspekt der Erfindung betrifft eine Kartoffelschälscheibe mit einer Vielzahl von Zähnen auf dessen Oberfläche, die eine rechteckige Rampenform in eine Orientierungsrichtung haben und entlang von parallelen, kreisförmigen Ringbahnen angeordnet sind, derart, dass eine Höhe eines Zahns in der Orientierungsrichtung insbesondere stetig zunimmt, die tangential zur Ringbahn ist, so dass die Höhe des Zahns an einem Anfang eines Zahns geringer ist als die Höhe des Zahns an dessen Ende Orientierungsrichtung betrachtet. Ein Schälen bei Rotation in Orientierungsrichtung der Zähne und ein Glätten bei Rotation in die entgegengesetzte Richtung können so ermöglicht werden.

Ein weiterer Aspekt der Erfindung betrifft eine Kartoffelschälscheibe mit einer Vielzahl von Zähnen auf dessen Oberfläche, wobei ein Scheibenteil der Kartoffelschälscheibe aus einem Blech hergestellt ist und die Vielzahl der Zähne durch Umformen des Bleches erzeugt sind. Insbesondere bilden die Zähne jeweils eine Vertiefung, die wasserdicht ist und als Behälter für Wasser genutzt werden kann, wenn die Kartoffelschälscheibe umgedreht wird, so dass die Zähne nach unten zeigen. Der Aufwand zum Reinigen der Kartoffelschälscheibe kann auf diese Weise signifikant reduziert werden.

Ein weiterer Aspekt der Offenbarung betrifft eine Kartoffelschälscheibe zum Schälen von Kartoffeln, wobei die Kartoffelschälscheibe eine mittige Öffnung aufweist, die durch eine Innenkontur der Kartoffelschälscheibe gebildet wird, wobei eine Oberfläche der Kartoffelschälscheibe eine Vielzahl von Zähnen mit einer Ausrichtung und/oder eine abrasive Oberflächenstruktur mit einer Körnung von höchsten 800 µm, insbesondere höchstens 600 µm und/oder mindestens 500µm, aufweist. Alternativ oder ergänzend weist die Kartoffelschälscheibe mindestens einen oder höchstens vier in Umfangrichtung rampenförmige Abschnitte aufweist. Besonders bevorzugt sind nur eine oder nur zwei rampenförmige Abschnitte. Ein rampenförmiger Abschnitt hat im Wesentlichen die Form eines Ringsegments mit ansteigender Höhe in Umfangrichtung gefolgt von einer abfallenden Stufe. Die Kartoffeln können auf diese Weise im Betrieb einerseits geschält und andererseits besser durchmischt werden, um homogener geschält zu werden. Wenn die Stufe nicht steil, sondern flach abfallend ist (mit einem Winkel von z.B. mindestens 30°), kann beim Wechseln der Rotationsrichtung der Kartoffelschälscheibe ein Polieren, d.h., Glätten der durch das Schälen mit der abrasiven Oberflächenstruktur aufgerauten Kartoffeloberfläche erzielt werden. Die Körnung wird durch Schleifmittel erzeugt, insbesondere durch Sand oder keramische Partikel z.B. Aluminiumoxid (Korund), Siliciumcarbid, Chrom(III)-oxid oder Zirconium(IV)-oxid. Vorzugsweise ist die Körnung mit einer wasserfesten Lackschicht überzogen. Vorzugsweise beträgt die Höhe der Stufe des rampenförmigen Abschnitts mindestens 5 mm und/oder höchstens 25 mm, besonders bevorzugt ungefähr 15 mm.

Ein weiterer Aspekt betrifft einen Kartoffelschäl-Topfeinsatz, dessen Topfboden die Merkmale der Kartoffelschälscheibe gemäß einem der vorhergehend beschriebenen Aspekte der Erfindung aufweist. Die innere Mantelfläche des zylindrischen Topfteils kann dann ebenfalls eine abrasive Oberfläche mit ausgerichteten Zähnen und/oder einer Körnung aufweisen. Auf diese Weise kann die Schälzeit weiter reduziert werden. Der Kartoffelschäl-Topfeinsatz wird vorzugsweise in den Speisenzubereitungstopf einer Küchenmaschine eingeführt und/oder mit dem Topfboden an dem rotierbaren Werkzeug zum Mischen und/oder Zerkleinern der Küchenmaschine gefestigt, so dass im Betrieb das Werkzeug den Kartoffelschäl-Topfeinsatz rotiert. In einem alternativen Aspekt ist ein System umfassend eine Kartoffelschälscheibe gemäß einem der vorhergehend beschriebenen Aspekte der Erfindung sowie ein Wandeinsatz mit einer abrasiven Oberfläche mit ausgerichteten Zähnen und/oder einer Körnung. Die abrasive Oberfläche hat insbesondere dieselben Merkmale wie in einer oder mehreren Ausführungsformen im Kontext der Kartoffelschälscheibe beschrieben. Insbesondere ist der Wandeinsatz in Richtung der Längsachse, d.h., im montierten Zustand in Richtung der Mittelachse, im Wesentlichen konisch geformt. Der Wandeinsatz kann auf diese Weise einfach in ein ebenfalls im Wesentlichen konisch geformten Speisenzubereitungsgefäß von oben gesteckt werden und bleibt automatisch (durch die Schwerkraft) in einer vorgesehen Einsatzposition. Alternativ oder ergänzend kann der Wandeinsatz Befestigungsmittel, insbesondere einen oder mehrere Auswölbungen nach außen, nach oben erstreckende Haken oder nach unten erstreckende Füße umfassen, um zuverlässig im eingesetzten Zustand in der vorgesehen Einsatzposition in einem Speisenzubereitungsgefäß zu bleiben, während Kartoffeln geschält werden. Insbesondere kann der Wandeinsatz mehrteilig sein. Bevorzugt ist jedoch ein einteiliger Wandeinsatz.

Ein weiterer Aspekt betrifft eine Kartoffelschälscheibe mit einer Vielzahl von Zähnen oder abrasiven Elementen auf dessen Oberfläche zum Schälen von Kartoffeln, wobei sich die Kartoffelschälscheibe dadurch auszeichnet, dass die Kartoffelschälscheibe so beschaffen ist, dass sie auf einem rotierbaren Werkzeug einer Küchenmaschine lösbar (also zerstörungsfrei manuell lösbar) angebracht werden kann, vorzugsweise durch ein manuelles Aufstecken. Insbesondere weist die Kartoffelschälscheibe hierzu eine mittige Öffnung auf, die bevorzugt durch eine Innenkontur der Kartoffelschälscheibe gebildet wird. Insbesondere umfasst die Oberfläche der Kartoffelschälscheibe Zähne oder abrasive Elemente mit steilen Flächen (z.B. mit einer Neigung von 80° bis 100°, bevorzugt 90°) zum Bilden einer Schneidkante für das Schälen, so dass durch ein Rotieren der Kartoffelschälscheibe in eine erste und/oder zweite Rotationsrichtung um eine Mittelachse, die insbesondere koaxial zur mittigen Öffnung verläuft, Kartoffeln durch die Zähne geschält werden bzw. geschält werden können. Ein weiterer Aspekt betrifft eine Verwendung einer Kartoffelschälscheibe in einer Küchenmaschine zum Zubereiten einer Speise durch Erhitzen und/oder Zerkleinern. Insbesondere weist die Kartoffelschälscheibe die in dem vorherigen Aspekt erläuterten Merkmale auf.

Die Definitionen, Merkmale und Ausgestaltungsvarianten des eingangs beschriebenen Aspekts der Erfindung gelten auch für die übrigen Aspekte. Gleichsam können die übrigen Aspekte mit dem eingangs beschriebenen Aspekt der Erfindung zu weiteren Ausgestaltungen kombiniert werden.

Nachfolgend werden Ausführungsbeispiele der Erfindung auch anhand von Figuren näher erläutert. Merkmale der Ausführungsbeispiele können einzeln oder in einer Mehrzahl mit den Aspekten der vorliegenden Erfindung sowie mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: Schematische Darstellung einer erfindungsgemäßen Kartoffelschälscheibe, die in einer Küchenmaschine manuell lösbar angebracht ist;
- Figur 2:: Schematische Darstellung einer erfindungsgemäßen Kartoffelschälscheibe in einer leicht räumlich geneigten Draufsicht;
- Figur 3:: Schematische Darstellung einer Detailansicht der Oberfläche einer erfindungsgemäßen Kartoffelschälscheibe;
- Figur 4a:: Schematische Darstellung von ersten Zahn-Varianten einer erfindungsgemäßen Kartoffelschälscheibe;
- Figur 4b:: Schematische Darstellung von zweiten Zahn-Varianten einer erfindungsgemäßen Kartoffelschälscheibe;
- Figur 5a:: Schematische Darstellung von der Unterseite einer erfindungsgemäßen Kartoffelschälscheibe;
- Figur 5b:: Schematische Schnittdarstellung zentral durch die Kartoffelschälscheibe insbesondere der Fig. 5a;
- Figur 5c:: Schematische, räumliche Darstellung einer Kartoffelschälscheibe, insbesondere der Fig. 5a und/oder 5b;
- Figur 6a:: Schematische Querschnitt-Darstellung einer ebenen Kartoffelschälscheibe in einer Küchenmaschine;
- Figur 6b:: Schematische Querschnitt-Darstellung eines Wandeinsatzes in einem Speisenzubereitungsgefäß einer Küchenmaschine mit aufgesteckter Kartoffelschälscheibe;
- Figur 6c:: Schematische Querschnitt-Darstellung eines Kartoffelschäl- Topfeinsatzes in einem Speisenzubereitungsgefäß einer Küchenmaschine; und
- Figur 6d:: Schematische Darstellung einer Geometrie einer Kartoffelschälscheibe (abrasive Struktur ausgeblendet).

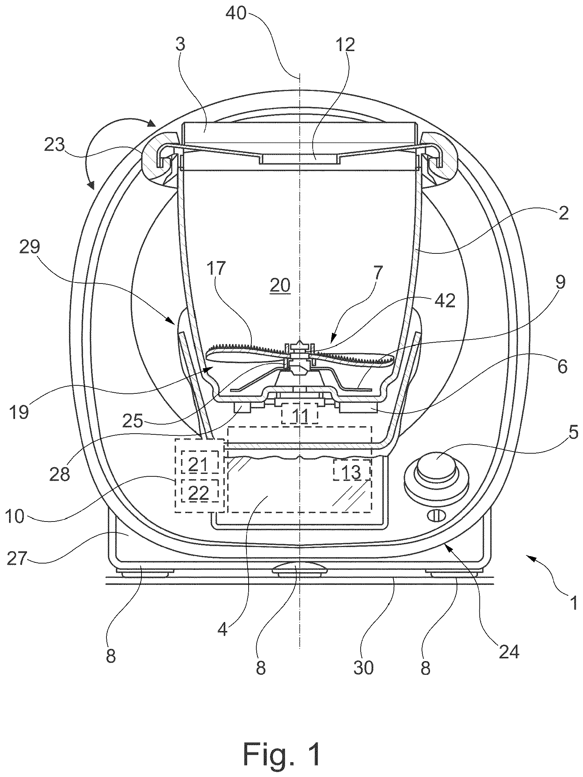

Die Figur 1 zeigt eine Küchenmaschine 1 zum Durchführen eines Speisenzubereitungsvorgangs in einem Speisenzubereitungsgefäß 2. Ein Heizelement 6 kann zum Erhitzen einer Speise 20 insbesondere im Bodenbereich des Speisenzubereitungsgefäßes 2 vorhanden sein. Zum Zerkleinern und/oder Mischen der Speise 20 kann ein drehbares Werkzeug 9 insbesondere mit einer Schneidkante eingesetzt sein, das über eine nicht gezeigte Welle insbesondere durch eine Öffnung im Boden des Speisenzubereitungsgefäßes 2 mit einem Antrieb 11 gekoppelt ist. Ein Gehäuse 27 der Küchenmaschine umschließt den Antrieb 11 und stellt eine Aufnahme 29 für das Speisenzubereitungsgefäß 2 bereit. Die Küchenmaschine 1 hat eine Steuerungseinrichtung 10 zum Ansteuern der Funktionskomponente wie Heizelement 6, Werkzeug 9 und/oder Antrieb 11. Messsensoren zum Erfassen eines Ist-Zustands wie z.B. ein Temperatursensor 28 können vorhanden sein. Insbesondere ist mindestens ein Gewichtssensor 8 in einem Standfüßen der Küchenmaschine 1, durch die das Gehäuse 27 auf einem Untergrund 30 steht, vorgesehen. Die Steuerungseinrichtung 10 umfasst einen Prozessor 21 und einen Speicher 22.

Ein Deckel 3 kann zum Schließen des Speisenzubereitungsgefäßes 2 vorgesehen sein. Der Deckel 3 kann eine Deckelöffnung 12 enthalten, um Zutaten in das durch den Deckel 3 überwiegend abgedeckte Speisenzubereitungsgefäßes 2 zu geben. Eine Verriegelungseinrichtung 23 kann vorgesehen sein, um den Deckel 3 beispielsweise mit Walzen wie in Figur 1 gezeigt durch eine mit Pfeilen illustrierte Schwenkbewegung im geschlossen Zustand zu verriegeln.

Über eine Benutzerschnittstelle 24, die insbesondere ein Touchscreen-Display 4 oder einen Knopf 5 umfassen, kann der Benutzer Informationen und Anweisungen von der Steuerungseinrichtung 10 erhalten und Eingaben für die Steuerungseinrichtung 10 tätigen. Die Benutzerschnittstelle 24 kann dazu auch durch den Benutzer betätigbare Bildzeichens 13 auf dem Touchscreen-Display 4 umfassen. Vorzugsweise hat die Steuerungseinrichtung 10 Zugriff auf digitale Rezepte mit mehreren Rezeptschritten, die mithilfe der Benutzerschnittstelle 24 durch den Benutzer und die Küchenmaschine zum Zubereiten einer Speise 20 umgesetzt werden können. Auf diese Weise kann ein Benutzer beispielsweise eine Schäl-Funktion aktivieren oder durch ein Einstellen der Drehzahl einen Schälvorgang wie gewünscht durchführen, nachdem die Kartoffelschälscheibe 7 auf dem Werkzeug 9 vom Benutzer angebracht wurde.

Die Steuerungseinrichtung 10 sorgt auf Basis von einem oder mehreren Kochparametern, die im digitalen Rezept definiert oder durch den Benutzer manuell über die Benutzerschnittstelle 24 eingestellt werden, dafür, dass eine Speise 20 in dem Speisenzubereitungsgefäß 2 in gewünschter Weise durch ein entsprechendes Steuern des Heizelements 6 und/oder des Antriebs 11 zubereitet wird. Der Schälvorgang kann als ein Rezeptschritt in einem solchen digitalen Rezept programmiert sein.

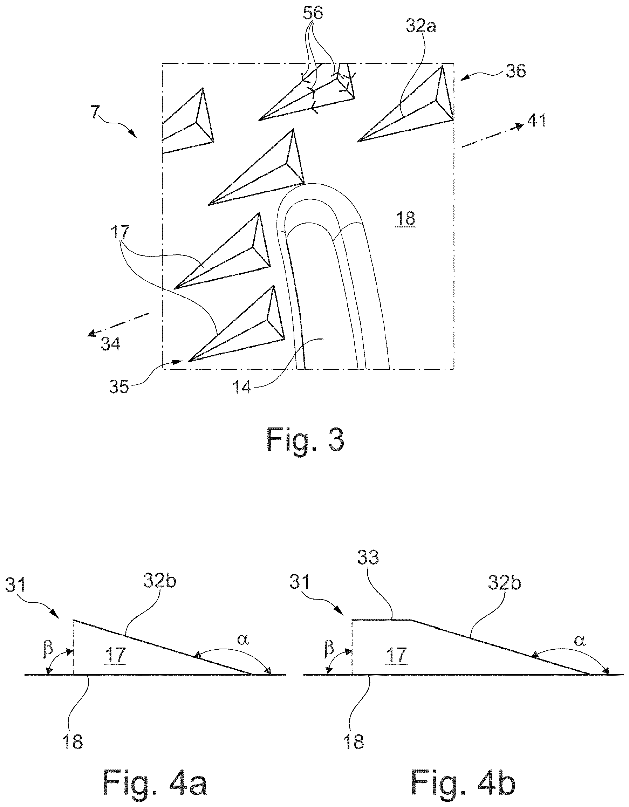

Eine Kartoffelschälscheibe 7 mit einer Wellenform 19 und einer Vielzahl von Zähnen 17 ist lösbar auf das Werkzeug 9 gesteckt. Ein Antriebsdrehmoment wird insbesondere mithilfe des Mitnehmers 25 von einem in Fig. 1 nicht sichtbaren Arm des Werkzeugs, der normalerweise nur zum Zerkleinern von Speisen 20 mit dessen Schneidkante dient, auf die Kartoffelschälscheibe 7 übertragen. Der Mitnehmer 25 liegt im Betrieb in Umlaufrichtung an einem Arm des Werkzeugs 9 an (durch die Schnittdarstellung der Fig. 1 nicht sichtbar). Die Kartoffelschälscheibe 7 wird hierdurch um die Mittelachse 40 rotiert. Kartoffeln als Speise 20, die von oben in das Speisenzubereitungsgefäß 2 und auf die Kartoffelschälscheibe 7 gegeben werden, können auf diese Weise insbesondere in einem nicht dargestellten Wasserbad geschält werden. Vorzugsweise wird für das Wasserbad 600 ml Wasser in das Speisenzubereitungsgefäß gegeben. Die verschiedenen Möglichkeiten hinsichtlich der Speisenzubereitung in Abhängigkeit von der Rotationsrichtung wird im Zusammenhang der Figur 3 erläutert.

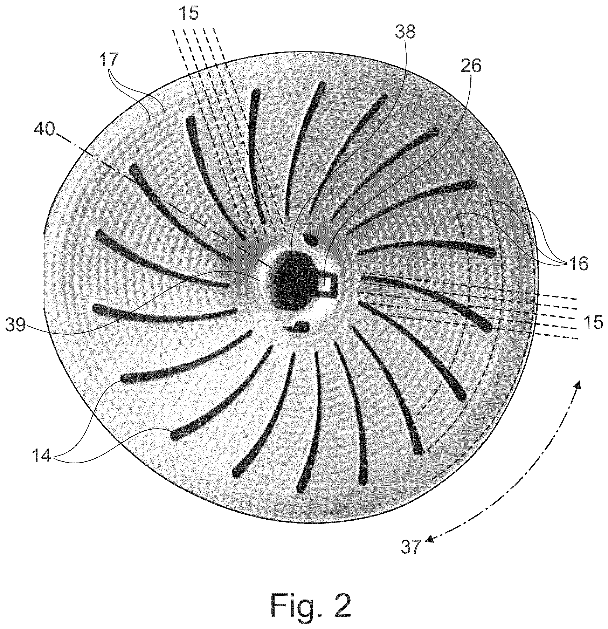

Die Figur 2 zeigt eine erfindungsgemäße Kartoffelschälscheibe 7, insbesondere mit einem Durchmesser von mindestens 120 mm und/oder höchstens 160 mm, bevorzugt ungefähr 135 mm oder 148 mm. Infolge der Wellenform 19 (vgl. Fig. 1) weist die gezeigte Kartoffelschälscheibe 7 eine Höhe von mindestens 20 mm und/oder höchstens 40 mm, bevorzugt ungefähr 30 mm auf. Ein Rastelement 26, das zur Mittelachse 40 hervorsteht und elastisch radial bewegt werden kann, dient dem Verbinden mit einem rotationssymmetrischen Antriebskörper, der bevorzugt eine umlaufende Nut 42 aufweist, in die das Rastelement 26 einschnappen kann. Das Rastelement 26 bildet auf diese Weise einen Schnappverschluss. Insbesondere ist der Schnappverschluss vorzugsweise einstückig in die Innenkontur 39, welche die Öffnung 38 begrenzt, eingebracht.

Die Kartoffelschälscheibe 7 umfasst eine Vielzahl von Schlitzen 14, die sich bogenförmig innerhalb der inneren und äußeren Begrenzung der Kartoffelschälscheibe 7 im Wesentlichen in radiale Richtung erstrecken und in Umfangrichtung 37 gleichmäßig voneinander beabstandet sind.

In einer Ausgestaltung sind die Zähne 17 der Kartoffelschälscheibe in zueinander parallelen Reihen 15 angeordnet. Eine Reihe 15 ist insbesondere geradlinig. Vorzugsweise verlaufen die zueinander parallelen Reihen 15 parallel oder im Wesentlichen parallel zu einer radialen Richtung bezogen auf die Mittelachse 40. In einer Ausgestaltung ist die Ausrichtung der Zähne 17 im Wesentlichen senkrecht zur Reihe 15. In einer Ausführungsform weisen Zähne 17 von zwei benachbarten Reihen 15 parallele Ausrichtungen auf. Weil naturgemäß nur eine Reihe radial von der Mittelachse 40 nach außen verlaufen kann und die dazu parallelen Reihen zwangsläufig außermittig nach außen verlaufen, sind die Ausrichtungen der Zähne 17 der außermittig verlaufenden Reihen nicht in Umfangrichtung orientiert. Dennoch wird durch diese Art und Weise der Anordnung ein besonders homogenes und damit Effizientes Schälen ermöglicht, weil in besonders kurzer Zeit ein akzeptables Schälergebnis vorliegt. In einer Ausgestaltung werden mehrere Reihengruppen mit jeweils parallelen Reihen und paralleler Ausrichtung der Zähne vorgesehen. Über den gesamten Umfang können dann mehrere, bevorzugt mindestens vier, besonders bevorzugt mindestens acht, solcher Reihengruppen um die mittige Öffnung herum vorgesehen werden. Die Reihen von zwei in Umfangrichtung benachbarten Reihengruppen schließen dann einen Winkel zueinander ein, damit die Reihen keine übermäßige Abweichung zur radialen Richtung und die Zähne 17 keine übermäßige Abweichung zu der Umfangsrichtung erhalten. In einer Ausgestaltung kreuzen die Reihen die Ringbahnen unter einem Winkel von mindestens 60° und/oder höchstens 120°. In einer Ausgestaltung ist insbesondere in einem Bereich um einen Schlitz herum ein Teil der Zähne 17 nicht bündig mit benachbarten Zähnen 17 einer Reihe 15 angeordnet, um eine höhere Zahndichte trotz der Schlitze zu erhalten. Die individuelle Anordnung der Zähne 17, die an Schlitze 14 angrenzen, wurden nach rein ästhetischen Gesichtspunkten angeordnet.

Die Zähne 17 sind in dem Ausführungsbeispiel der Fig. 2 gleichzeitig in einer Vielzahl von Ringbahnen 16 angeordnet, während sie ebenfalls Gruppen von parallelen Reihen 15 bilden, die sich im Wesentlichen radial erstrecken. Vorzugsweise ist die Ausrichtung der Zähne 17 senkrecht zu der jeweiligen Reihe 15.

Die Figur 3 zeigt eine Detailansicht einer erfindungsgemäßen Kartoffelschälscheibe 7. Die Zähne 17 sind hier besonders im Bereich der Schlitze 14 so auf Ringbahnen (analog zu Fig. 2) verteilt, dass eine größtmögliche Dichte der Anordnung erzielt wird. In einer Ausgestaltung haben die Zähne 17 eine Breite quer zu deren Ausrichtung von mindestens 1 mm und/oder höchstens 5 mm, bevorzugt höchstens 2 mm. In einer Ausgestaltung haben die Zähne 17 eine Länge parallel zu deren Ausrichtung von mindestens 1 mm und/oder höchstens 5 mm. In einer Ausgestaltung haben die Zähne 17 eine Höhe von höchstens 2 mm, mindestens jedoch eine Höhe von 0,5 mm. Insbesondere sind die Zähne länger als breit und/oder länger als hoch und/oder breiter als hoch und/oder ungefähr so hoch wie breit an einer Vorderseite 36 der Zähne 17.

In dem speziellen Ausführungsbeispiel der Figur 3 haben die Zähne 17 exemplarisch die Form eines Tetraeders mit einer Dreieckfläche an der Vorderseite 36, die in die Ausrichtungsrichtung zeigt. Zur Rückseite 35 haben die Zähne zwei Dreiecksflächen, die sich seitlich von einer Schräge 32a zur Oberfläche 18 der Kartoffelschälscheibe 7 erstrecken. Die Schräge 3a erstreckt sich von der Oberfläche 18 von der Rückseite zur oberen Ecke der Dreiecksfläche der Vorderseite 36. Die Zähne 17 sind an der Vorderseite 36 steiler zur Oberfläche 18 der Kartoffelschälscheibe 7 geformt als an der gegenüberliegenden Rückseite 35. In einer Ausgestaltung sind alle Kanten mit Kantenradien 56 versehen, wie in Fig. 3 schematisch symbolisiert ist.

Vorzugsweise entspricht die erste Rotationsrichtung 41, die im Wesentlichen in die Ausrichtungsrichtung der Zähne 17 zeigt, einem Rechtslauf und die entgegengesetzte, zweite Rotationsrichtung 34 einem Linkslauf. Alternativ kann die erste Rotationsrichtung 41 einem Linkslauf entsprechen und die zweite Rotationsrichtung 34 einem Rechtslauf (siehe Fig. 3).

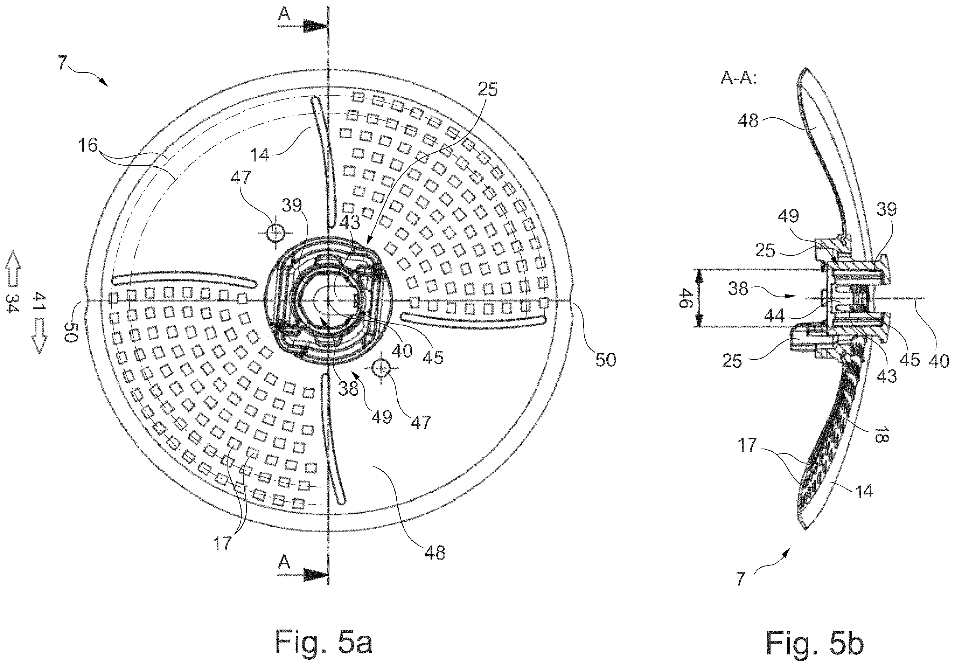

Zum Schälen zeigt die Rotationsrichtung im Wesentlichen in Ausrichtungsrichtung der Zähne, wie die erste Rotationsrichtung 41 der Figur 3 zeigt. Bei Anwendung einer umgekehrten zweiten Rotationsrichtung 34, die im Wesentlichen entgegengesetzt zur Ausrichtungsrichtung der Zähne 17 ist, kann mit der in gleicher Weise auf dem Werkzeug 9 angebrachten Kartoffelschälscheibe 7 eine Speisenzubereitung vom Typ "slow cooking" und "sous vide" durchgeführt werden, die im Folgenden in Verbindung mit der in Fig. 1 gezeigten Küchenmaschine erläutert werden und auch analog mit den rechteckig rampenförmigen Zähne 17 der Kartoffelschälscheibe der Fig. 5a und 5b umgesetzt werden kann.

Für eine Speisenzubereitung vom Typ "slow cooking" und "sous vide" wird die Kartoffelschälscheibe 7 auf dem Werkzeug 9 montiert. Wasser und Zutaten (mit oder ohne Beutel um die Zutaten oder Speise 20) werden in das Speisenzubereitungsgefäß 2 eingefüllt. Der Benutzer kann über einen Modus des Küchengeräts 1, der durch die Steuerung 10 unterstützt wird, oder durch entsprechende manuelle Einstellungen einer Vorgangszeit, einer Temperatur und Drehzahl des Werkzeugs 9 den Speisenzubereitungsvorgang starten. Die Wellenform 19 und die Rotationsbewegung der Kartoffelschälscheibe 7, die von dem Werkzeug 9 angetrieben wird, bewirkt eine gleichmäßige Durchmischung und Temperaturverteilung im Speisenzubereitungsgefäß 2 ein optimales Garen der Speise 20. Durch die kompakte Bauform und Wellenform 19 der Kartoffelschälscheibe 7 kann das Volumens des Speisenzubereitungsgefäßes 2 optimal genutzt werden. Die Zähne 17 haben in der zweiten Rotationsrichtung 34 keine Auswirkung auf die Speise 20. Durch das Drehverhalten in diesem Modus kann eine gleichmäßige Temperaturverteilung der Speise im Speisenzubereitungsgefäß 2 erhalten werden. In einer Ausgestaltung ist ein digitales Rezept und/oder die Steuerung 10 so eingerichtet, dass mithilfe der Kartoffelschälscheibe 7 ein kombinierter Ablauf wie Schälen und Polieren, Schälen und Garen, Einweichen und Schälen und/oder das Erzielen einer unterschiedlichen Oberflächengüte bei verschiedenen Lebensmittel, Zutaten und/oder Speisen wie Kartoffeln oder Rüben erzielt werden kann. Darüber hinaus wird ein komplexer Speisenzubereitungsvorgang (beispielsweise durch ein entsprechendes, digitales Rezept oder ein entsprechendes manuelles Einstellen an der Küchenmaschine) ermöglicht, in dem Lebensmittel zunächst geschält, anschließend poliert und schließlich gegart werden, vorzugsweise ohne ein Lösen, Wenden oder Wechseln der Kartoffelschälscheibe 7. Die Unterstützung eines solch komplexen Speisenzubereitungsvorgangs durch den Benutzer kann minimiert oder sogar mit Ausnahme des Aktivierens des digitalen Rezeptes und zuführen der Zutaten eliminiert werden. In einer Ausgestaltung ist vorgesehen, dass die Kartoffelschälscheibe 7 auf der Unterseite eine weitere Funktionsoberfläche aufweist, z.B. eine glatte Oberfläche, mit der ebenfalls Slow Cooking und Sous Vide durchgeführt werden kann.

Die Figuren 4a und 4b zeigen zwei Zahnvarianten von erfindungsgemäßen Kartoffelschälscheiben 7, die beispielsweise auf die Ausgestaltungen in den Figuren 2, 3, 5a und 5b anwendbar sind, in einer Seitenansicht quer zur Ausrichtung des jeweiligen Zahns 17. Beide Zahnvarianten sind rampenartig und auch rampenförmig. In der Zahnvariante der Fig. 4a weist der Zahn 17 (eine Schräge 32a oder) eine schräge Fläche 32b an der Rückseite mit einem Winkel α zwischen 140° und 170° zur Oberfläche 18 der Kartoffelschälscheibe 7 auf. Die in Fig. 4b dargestellte Zahnvariante hat zusätzlich zu der Zahnvariante der Fig. 4a noch ein Plateau 33, das sich an das Ende der schrägen Fläche 32b anschließt. Das Plateau verläuft vorzugsweise gerade und/oder im Wesentlichen parallel zur Oberfläche 18 der Kartoffelschälscheibe 7. In den Zahnvarianten der Fig. 4a und 4b können die schräge Fläche 32b und/oder das Plateau 33 aus Blech sein oder einen Vorsprung aus Vollmaterial aus der Oberfläche 18 begrenzen. Der Vorsprung kann auch durch Umformen eines Bleches erzeugt sein. Die Schälkante 31 hat bevorzugt einen Winkel β zur Oberfläche 18 zwischen 80° und 100°, bevorzugt ungefähr 90° oder 91°. Zwischen der Schälkante 31 und der Oberfläche 18 erstreckt sich bevorzugt ein geschlossener Bereich der Oberfläche 18 oder einen Durchgang. In einer Ausgestaltung sind die Schräge 32a bzw. die schräge Fläche 32b eines rampenartigen Zahns 17 geradlinig, eben und/oder mit konstanter Steigung ausgeführt, insbesondere über deren gesamte Erstreckung ohne Berücksichtigung von Kantenradien oder dergleichen.

In einer Variante haben die Zähne 17 eine eckige Form und/oder jeweils eine erste Fläche an der Rückseite mit einem Winkel α zur Oberfläche 18 der Kartoffelschälscheibe 7 und/oder eine zweite Fläche an der Vorderseite mit einem Winkel β zur Oberfläche 18 der Kartoffelschälscheibe 7 (vgl. Fig. 4b). Ein Plateau, das vorzugsweise gerade und/oder im Wesentlichen parallel zur Oberfläche 18 der Kartoffelschälscheibe 7 verläuft, verbindet die erste Fläche und die zweite Fläche.

Insbesondere liegt der Winkel α und/oder der Winkel β zwischen 80° und 100°, bevorzugt ungefähr 90°. Eine Normale der ersten und/oder zweiten Fläche ist tangential, im Wesentlichen tangential oder parallel zur Umfangrichtung der Kartoffelschälscheibe 7 ausgerichtet.

Figur 5a zeigt eine schematische Darstellung einer erfindungsgemäßen Kartoffelschälscheibe 7 von unten. Die Kartoffelschälscheibe 7 hat einen Scheibenteil 48, der sich radial vollumfänglich von einem zentralen Nabenteil 49 mit der Öffnung 38 und der Innenkontur 39 nach außen erstreckt. Die Zähne 17 sind in Fig. 5a von unten zu erkennen, weil bei im Wesentlichen konstanter Scheibendicke des Scheibenteils 48 die Zähne 17 an der Oberseite hervorstehen. Insbesondere bilden die Zähne an der Unterseite eine Vertiefung, der zur Vorsprungskontur an der Oberfläche korrespondiert. Insbesondere zeigt Fig. 5a solche Vertiefungen, die zu den Vorsprüngen der Zähne, die z.B. in Fig. 5b gezeigt werden, korrespondieren.

Die Zähne 17 sind auf parallelen Ringbahnen 16 angeordnet, die koaxial um die Mittelachse 40 verlaufen. Die Zähne selber haben eine rechteckige Außenkontur und/oder sind nicht gebogen. Die Zähne haben in der Draufsicht und/oder in der Unteransicht eine im Wesentlichen quadratische Außenkontur. Es gibt Abschnitte in Umfangrichtung zwischen zwei Spalten 14, zwischen denen die Zähne weggelassen wurden. Dort ist eine glatte Oberfläche 18 an der Oberseite (und Unterseite).

In einer Ausgestaltung ist die Ausrichtung der Zähne 17 in Richtung zu der jeweiligen Ringbahn 16, bevorzugt parallel zu einer Tangente zur Ringbahn 16, wobei die Tangente durch einen Schnittpunkt einer mittigen Längsachse eines Zahns 17 mit der Ringbahn 16 verläuft

Tests haben gezeigt, dass besonders wenige Schlitze, z.B. vier Schlitze, beim Benutzer einen besonders ästhetischen Eindruck erwecken, weil diesen dann eine besondere Aufmerksamkeit geschenkt wird und ein für den Benutzer entspannendes Bild erzeugt. Andererseits kann auch eine Vielzahl von Schlitzen, z.B. achtzehn Schlitze, als besonders ästhetisch und ansprechend wahrgenommen werden. Für diese Empfindung beim Benutzer ist es unerheblich, ob die Schlitze an einer Winkelposition sich in einer durchgängigen Öffnung radial erstrecken oder in mehrere Öffnungen unterteilt sind. Solche mehrteiligen Schlitze, z.B. in Erstreckungsrichtung dreigeteilte Schlitze an einer Winkelposition, erwecken beim Benutzer einen geschlitztflächigen Gesamteidruck, der ebenfalls als besonders attraktiv aufgefasst wird. Verbessert werden kann der ästhetische Eindruck beim Benutzer durch einen leicht bogenförmigen Verlauf der Schlitze radial von der Mittelachse weg, weil dies als dynamischen und modern empfunden wird. Besonders positiv haben Benutzer in Tests das nur teilweise bedecken der Oberfläche 18 mit abrasiven Strukturen empfunden, weil das Abwechseln von glatten und nicht-glatten Oberflächenabschnitten ein überraschendes, interessantes Gefühl beim Beobachter auslöst, der einen solchen Anblick nicht gewöhnt ist. Es vermittelt das Gefühl von Innovation und Hochwertigkeit. Besonders wurde dies durch vier Abschnitte in Umfangrichtung erhalten, die abwechselnd glatt und abrasive Strukturen aufweisen. Die individuelle Anordnung der Zähne 17, die an Schlitze 14 angrenzen, wurden ebenfalls nach rein ästhetischen Gesichtspunkten angeordnet.

Die Kartoffelschälscheibe 7 wird zum Schälen von Kartoffeln mit der Öffnung 38 auf ein Werkzeug 9 aufgesteckt. Radial nach innen gerichtete, sich längs der Mittelachse 40 erstreckende Wülste, die über den Umfang der Innenkontur 39 verteilt sind, dienen einem stabilen Sitz der Kartoffelschälscheibe 7 auf dem rotierbaren Werkzeug 9 der Küchenmaschine 1. Ein Freischnitt 43 erlaubt ein axiales hervorstehen eines zentralen Abschlusselements des Werkzeugs, z.B. einer Befestigungsniete, und gleichzeitig das Erzeugen eines axialen Rastarms 44 mit einer an dessen freiem Ende radial nach innen hervorstehenden Rastnase 45, die in der vorgesehenen Aufsteck-Position der Kartoffelschälscheibe 7 auf dem rotierbaren Werkzeug 9 in eine entsprechende Nut 42, insbesondere Ringnut, des Werkzeugs 9 eingreifen kann. Ein manuell lösbarer, jedoch stabiler Sitz der Kartoffelschälscheibe 7 im aufgesteckten Zustand kann so erzielt werden. Insbesondere handelt es sich dabei um eine Schnappverschlussverbindung. Ein Mitnehmer 25 ermöglicht ein Koppeln des Werkzeugs 9 mit der Kartoffelschälscheibe 7, so dass eine Rotation des Werkzeugs 9 zu einer Rotation der Kartoffelschälscheibe 7 insbesondere mit derselben Rotationsgeschwindigkeit führt. Mindestens eine Bohrung 7, bevorzugt zwei Bohrungen, und/oder mindestens eine Kerbung 50, bevorzugt zwei Kerbungen 50, erlauben einen verbesserten Wassertransport zur Oberfläche 18.

Zum Schälen der Kartoffeln wird vorzugsweise eine Rotationsgeschwindigkeit von mindestens 500 rpm und/oder höchstens 1100 rpm eingesetzt. Die Einheit "rpm" steht für Umdrehungen pro Minute. Kartoffeln können in mindestens 4 und/oder höchstens 7 Minuten hinreichend geschält werden.

Figur 5b zeigt eine schematische Darstellung eines Schnittes, der zentral durch eine Kartoffelschälscheibe 7 verläuft, insbesondere der Kartoffelschälscheibe 7 der Fig. 5a. In Fig. 5b sind die an der Oberfläche 18 der Kartoffelschälscheibe 7 hervorstehenden Zähne 17 sichtbar. In der gezeigten Schnittdarstellung hat die Kartoffelschälscheibe 7 insgesamt eine gebogene Form. Insbesondere verläuft der Scheibenteil 48 der Kartoffelschälscheibe 7 wellenförmig um den Nabenteil 49. In der Schnittansicht der Fig. 5b ist ein Wellenberg der Wellenform erkennbar. Der Mitnehmer 25 erstreckt sich ausgehend vom äußeren Rand des Nabenteils 49 axial nach unten. Die Länge des Mitnehmers 25 ist mindestens halb so lang wie die Öffnung 38. Die Fig. 5b zeigt den Freischnitt 43, der den Rastarm 44 erzeugt. An dem freien Ende des Rastarms 44 ist die Rastnase 45 angeordnet.

In einer Ausgestaltung hat der Scheibenteil 48 in der Draufsicht im Wesentlichen die Form einer Lochscheibe, d.h., eine Scheibe mit einer zentralen Durchgangsbohrung. Vorzugsweise ist auch bei einer wellenförmigen Kartoffelschälscheibe 7 ein Innenrand des Scheibenteils 48 auf einer Ebene senkrecht zur Mittelachse 40. Von diesem ebenen Innenrand, der vorzugsweise mit dem Nabenteil 49 insbesondere stoffschlüssig (Umspritzen oder Kleben) oder kraftschlüssig (von oben und unten eingespannt) verbunden ist, erstreckt sich der Scheibenteil 48 in radiale Richtung mit unterschiedlichen Steigungen in Abhängigkeit von der Winkelposition zur Mittelachse 40. Während der innere Rand des Scheibenteils 48 auf einer Ebene senkrecht zur Mittelachse 40 ist, beschreibt der äußere Rand eine Welle in Umfangrichtung mit mindestens einem oder zwei Wellenbergen und Wellentälern.

Insbesondere umfasst die Kartoffelschälscheibe 7 Metall und/oder ist zweiteilig oder genau dreiteilig aufgebaut, d.h., aus separat gefertigten Teilen hergestellt. Alternativ ist die gesamte Kartoffelschälscheibe 7 einstückig mittels Spritzgusses aus Kunststoff hergestellt.

Bevorzugt ist der Scheibenteil 48 aus Metall, vorzugsweise ein Blech, insbesondere mit einer (konstanten) Dicke von mindestens 1 mm und/oder höchstens 2 mm. In einer Ausgestaltung ist der Nabenteil 49 aus Kunststoff, vorzugsweise Polypropylen, hergestellt und/oder um einen inneren Randbereich des Scheibenteils 48 umspritzt. Vorzugsweise ist der Nabenteil 49 ebenfalls aus zwei separat gefertigten Teilen hergestellt, insbesondere einem unteren Teil und einem oberen Teil. Der Durchmesser 46 der Öffnung 38 beträgt 17 mm, bevorzugt mit einer Übergangspassung.

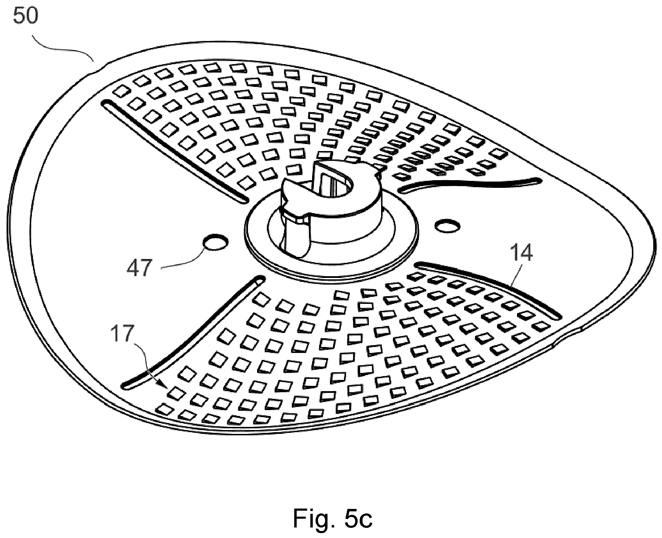

Figur 5c zeigt eine Kartoffelschälscheibe insbesondere der Fig. 5a und/oder 5b in einer räumlichen Darstellung von schräg oben. Die Rampenform der Zähne 17 ist hier gut erkennbar.

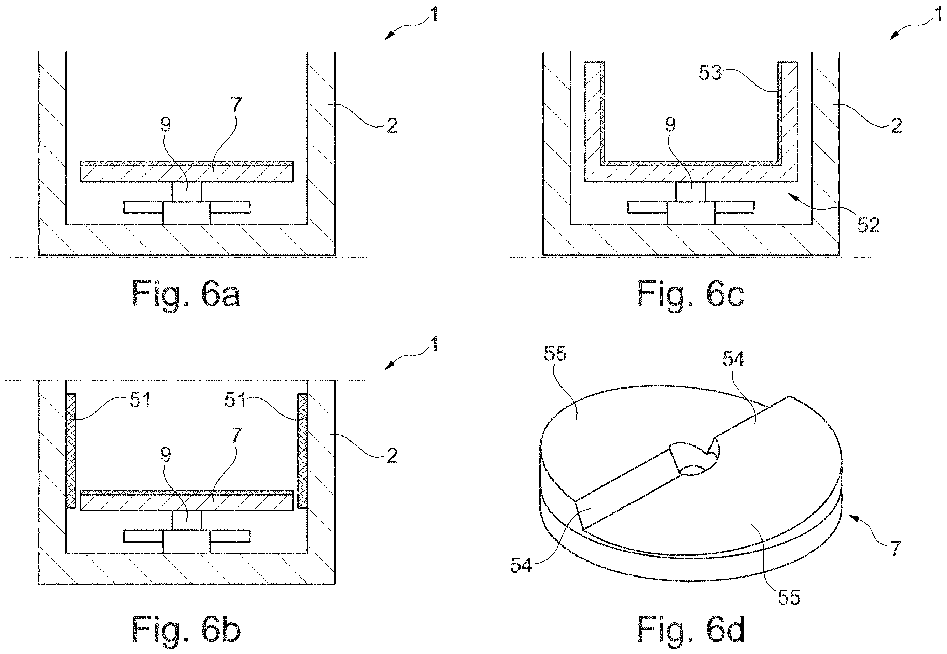

Figur 6a zeigt eine schematische Querschnitt-Darstellung einer ebenen Kartoffelschälscheibe in einer Küchenmaschine 1 (vgl. Fig. 1), wobei die Kartoffelschälscheibe auf ein drehbares Werkzeug 9 der Küchenmaschine 1 aufgesteckt ist und sich innerhalb des Speisenzubereitungsgefäßes 2 befindet. In Fig. 6a ist nur ein Ausschnitt der Küchenmaschine 1 gezeigt. Eine abrasive Struktur mit ausgerichteten Zähnen ist vereinfacht als dicke Linie an der Oberseite der Kartoffelschälscheibe 7 dargestellt. In den folgenden Ausführungsbeispielen kann die eben dargestellte Kartoffelschälscheibe 7 eben, wellenartig oder wellenförmig sein.

Figur 6b zeigt eine schematische Querschnitt-Darstellung des Ausführungsbeispiels der Fig. 6a mit einem zusätzlichen Wandeinsatz 51. Auch bei dem Wandeinsatz 51 ist die abrasive Struktur mit Zähnen vereinfacht als dicke Linie dargestellt. Der Wandeinsatz 51 ist bevorzugt flächig bogenförmig und/oder an die Oberfläche der Innenwandung des Speisenzubereitungsgefäßes 2 der Küchenmaschine 1 angepasst und/oder kann manuell lösbar daran befestigt werden. Kartoffeln werden so effizienter geschält.

Figur 6c zeigt eine schematische Querschnitt-Darstellung eines Kartoffelschäl-Topfeinsatzes 52. Auch hier ist die abrasive Struktur mit Zähnen vereinfacht als dicke Linie dargestellt. Ein Topfeinsatz 52 kann aus der Kartoffelschälscheibe 7 als Boden und einer Topfeinsatzwandung 53 hergestellt werden.

Figur 6d zeigt eine schematische Darstellung einer Geometrie einer Kartoffelschälscheibe 7, die Stufen 54 umfasst. Die abrasive Struktur mit Zähnen ist auch hier ausgeblendet. Grundsätzlich ist es möglich, die abrasive Struktur durch eine lösbare Lage mit höchstens 2 mm Dicke bereitzustellen, die bei Bedarf gewechselt werden kann. Rampenförmige Abschnitte 55 erstrecken sich in Umfangrichtung bis zu einer solchen Stufe 54. Stufen 54 und rampenförmige Abschnitte 55 sind daher in Umfangrichtung abwechseln vorzufinden.

Vorzugsweise wird zum Schälen der Kartoffeln in dem Speisenzubereitungsgefäß 2 z.B. 600ml Wasser in das Speisenzubereitungsgefäß gegeben, um ein Wasserbad zu erzeugen. Das Werkzeug zum Mischen und/oder Zerkleinern bewirkt im Betrieb eine aufsteigende Strömung des Wassers unterhalb der Kartoffelschälscheibe 7. Die Kartoffeln werden im rohen Zustand geschält, bevorzugt bei z.B. 800 rpm für 50 s bei 200 g Kartoffeln und 100 s bei 600 g Kartoffeln, wobei dazwischenliegende Werte hinsichtlich der Schäldauer linear interpoliert werden können. Das Kartoffelschälen kann auf diese Weise bei geringerem Verschnitt von Kartoffelmasse deutlich schneller erfolgen als bei einem manuellen Schälen der Kartoffeln.

## Patentansprüche

1. Kartoffelschälscheibe (7) zum Schälen von Kartoffeln, wobei die Kartoffelschälscheibe (7) eine mittige Öffnung (38) aufweist, die durch eine Innenkontur (39) der Kartoffelschälscheibe (7) gebildet wird, wobei eine Oberfläche (18) der Kartoffelschälscheibe (7) eine Vielzahl von Zähnen (17) aufweist, die eine Ausrichtung aufweisen, so dass durch ein Rotieren der Kartoffelschälscheibe (7) in eine erste Rotationsrichtung (41) um eine Mittelachse (40), die koaxial zur mittigen Öffnung (38) verläuft, Kartoffeln durch die Zähne (17) geschält werden.

2. Kartoffelschälscheibe (7) nach Anspruch 1, **dadurch gekennzeichnet, dass** die Kartoffelschälscheibe (7) wellenartig geformt ist.

3. Kartoffelschälscheibe (7) nach einem der vorhergehenden Ansprüche, **dadurch gekennzeichnet, dass** die Kartoffelschälscheibe (7) eine Vielzahl von Schlitzen (14) aufweist.

4. Kartoffelschälscheibe (7) nach einem der vorhergehenden Ansprüche, **dadurch gekennzeichnet, dass** die Zähne (17) rampenartig sind.

5. Kartoffelschälscheibe (7) nach einem der vorhergehenden Ansprüche, **dadurch gekennzeichnet, dass** die Zähne (17) in Richtung der jeweiligen Ausrichtung gemessen von der angrenzenden Oberfläche (18) der Kartoffelschälscheibe (7) einen Steigungswinkel α von mindestens 140°, bevorzugt mindestens 155°, und/oder höchstens 175°, bevorzugt höchstens 170°, aufweisen.

6. Kartoffelschälscheibe (7) nach einem der vorhergehenden Ansprüche, **dadurch gekennzeichnet, dass** die Zähne (17) der Kartoffelschälscheibe (7) auf Ringbahnen (16) angeordnet sind.

7. Kartoffelschälscheibe (7) nach dem vorhergehenden Anspruch, **dadurch gekennzeichnet, dass** eine Vielzahl von Ringbahnen koaxial zur Mittelachse (40) in einem gleichen, radialen Abstand zueinander vorgesehen sind.

8. Kartoffelschälscheibe (7) einem der vorhergehenden Ansprüche, **dadurch gekennzeichnet, dass** die Zähne (17) in Umfangrichtung einen gleichen Abstand aufweisen, der vorzugsweise mindestens 1 mm und/oder höchstens 4 mm beträgt.

9. Kartoffelschälscheibe (7) nach einem der vorhergehenden Ansprüche, **dadurch gekennzeichnet, dass** die Zähne (17) eine rechteckige Rampenform haben.

10. Kartoffelschälscheibe (7) nach einem der vorhergehenden Ansprüche, **dadurch gekennzeichnet, dass** die Zähne (17) in Richtung der jeweiligen Ausrichtung einen Schälkantenwinkel β von mindestens 80° und/oder höchstens 100°, besonders bevorzugt ungefähr 91°, zur angrenzenden Oberfläche (18) der Kartoffelschälscheibe (7) aufweisen.

11. Kartoffelschälscheibe (7) nach einem der vorhergehenden Ansprüche, **dadurch gekennzeichnet, dass** die Innenkontur (39) die mittige Öffnung (38) derart ausformt, dass die Kartoffelschälscheibe (7) mit der mittigen Öffnung (38) auf einen rotationssymmetrischen Körper mit einem Außendurchmesser von genau 17 mm aufgesteckt werden kann, so dass im aufgesteckten Zustand die Innenkontur (39) über eine Länge von mindestens 10 mm in Richtung der Mittelachse (40) an dem rotationssymmetrischen Körper anliegt.

12. Kartoffelschälscheibe (7) nach dem vorhergehenden Anspruch, **dadurch gekennzeichnet, dass** die Innenkontur (39) mittels eines U-förmigen Freischnittes (43) einen sich parallel zur Mittelachse (40) erstreckenden Rastarm (44) ausformt, der mit einer radial in Richtung der Mittelachse (40) vorstehenden Rastnase (45) ausgestattet ist, so dass beim Anbringen die Rastnase (45) in Richtung der Mittelachse (40) entlang des rotationssymmetrischen Körpers mit dem Außendurchmesser von genau 17mm entlang schleift und in der Lage ist, in eine Vertiefung des rotationssymmetrischen Körpers einzurasten, wenn der rotationssymmetrische Körper eine solche Vertiefung aufweist.

13. Küchenmaschine (1) mit einer Kartoffelschälscheibe (7) nach einem der vorhergehenden Ansprüchen zum Durchführen eines Speisenzubereitungsvorgangs durch Erhitzen, Zerkleinern und/oder Mischen einer Speise (20) in einem Speisenzubereitungsgefäß (2) mithilfe eines Heizelements (6) zum Erhitzen und eines Werkzeugs (9) zum Mischen oder Zerkleinern, wobei die Kartoffelschälscheibe (7) manuell lösbar auf das Werkzeug (9) aufgesteckt werden kann.

14. Küchenmaschine (1) nach dem vorhergehenden Anspruch, **dadurch gekennzeichnet, dass** in dem Speisenzubereitungsgefäß (2) ein Wandeinsatz (51) mit einer abrasiven Struktur angebracht oder ein Kartoffelschäl-Topfeinsatz (52) mit einer abrasiven Struktur angeordnet ist.

15. Verfahren zum Schälen von Kartoffeln mit einer Küchenmaschine (1) und einer Kartoffelschälscheibe (7), die eine mittige Öffnung (38) aufweist, die durch eine Innenkontur (39) der Kartoffelschälscheibe (7) gebildet wird, wobei eine Oberfläche (18) der Kartoffelschälscheibe (7) eine Vielzahl von Zähnen (17) aufweist, die eine Ausrichtung aufweisen, wobei das Verfahren folgende Schritte umfasst:
- Anbringen der Kartoffelschälscheibe (7) mit der mittigen Öffnung (38) auf ein Werkzeug (9) zum Mischen oder Zerkleinern der Küchenmaschine (1), das sich in einem Speisenzubereitungsgefäß (2) der Küchenmaschine (1) befindet;
- Zuführen von Wasser in das Speisenzubereitungsgefäß (2), so dass mindestens die Zähne (17) der Kartoffelschälscheibe (7) von Wasser umgeben sind;
- Aktivieren der Küchenmaschine (1) zum Rotieren des Werkzeugs (9) in eine erste Rotationsrichtung (41) um eine Mittelachse (40), die koaxial zur mittigen Öffnung (38) verläuft, um die Kartoffeln zu schälen;
- Aktivieren der Küchenmaschine (1) zum Rotieren des Werkzeugs (9) in eine zweite Rotationsrichtung (34), die entgegengesetzt zur ersten Rotationsrichtung (41) ist, um mithilfe der Kartoffelschälscheibe (7), die seit dem Anbringen am Werkzeug (9) nicht gelöst worden ist, einen Speisenzubereitungsvorgang durchzuführen, der kein Schälen von Kartoffeln beinhaltet.
